# FASCICULE DE BREVET EUROPEEN

(11) **EP 3 268 636 B1**
(45) Date de publication et mention de la délivrance du brevet: **19.12.2018**
(21) Numéro de dépôt: 16714957.4
(22) Date de dépôt: 15.02.2016
(51) Int. Cl.: F16H 59/04, F16H 59/02

(54) **DISPOSITIF DE RAPPEL VERS UNE POSITION DE POINT MORT D'UNE COMMANDE EXTERNE D'UNE BOÎTE DE VITESSES**
VORRICHTUNG ZUR RÜCKFÜHRUNG DER EXTERNEN STEUERUNG EINER GANGSCHALTUNG IN DEN LEERLAUF
DEVICE FOR RETURNING AN EXTERNAL CONTROL OF A GEARBOX TO A NEUTRAL POSITION

(30) Priorité: 10.03.2015 FR 1551987
(43) Date de publication de la demande: 17.01.2018
(73) Titulaire: PSA AUTOMOBILES S.A., 78300 Poissy (FR)
(72) Inventeur: ALLET, Cyril, 95340 Persan (FR); COQUEL, Carole, 78500 Sartrouville (FR); SAHRAOUI, Salim, 95400 Villiers le Bel (FR)
(86) Numéro de dépôt international: PCT/FR2016/050338
(87) Numéro de publication internationale: WO 2016/142595

(56) Documents cités:
- FR-A1- 2 959 176
- FR-A1- 2 993 828
- JP-A- H1 178 571
- US-A- 4 581 951

## Description

La présente invention se rapporte à un dispositif de rappel vers une position de point mort d'une commande externe d'une boîte de vitesses dans un véhicule automobile.

L'invention appartient plus particulièrement au domaine des commandes externes de boîtes de vitesses manuelles.

Certains véhicules automobiles disposent d'une boîte de vitesses manuelle dont les changements de rapport de démultiplication sont contrôlés par un système appelé commande externe.

Une telle commande externe comprend un levier dont l'extrémité supérieure est actionnée par le conducteur et dont une extrémité inférieure est munie d'une rotule. Un doigt de sélection fixé à cette rotule est accouplé au mécanisme de commande interne de la boîte de vitesses, éventuellement via une pièce de renvoi, par l'intermédiaire d'un câble ou d'une tringle, pour la sélection d'un ensemble de rapports de démultiplication de la boîte de vitesses.

Afin que le conducteur ne perçoive pas de jeu lors de la manipulation du levier, on équipe généralement la commande externe d'un dispositif de rappel qui exerce sur le doigt ou le renvoi de sélection des efforts pour rappeler le levier vers une position prédéfinie, appelée position de point mort.

On connaît par exemple du document FR-A1 -2 927 573 une commande externe d'une boîte de vitesses dans laquelle un dispositif de rappel comprenant un ressort exerce des efforts sur le doigt de sélection pour rappeler le levier vers la position de point mort.

Un tel dispositif a pour inconvénient d'exercer un effort symétrique entre les deux sens de sélection et ne permet donc pas de compenser une dissymétrie d'effort de sélection (fonction du sens de sélection), par exemple due à des mécanismes internes à la boîte de vitesses.

Le document JP H11 78571 A divulgue un dispositif de rappel vers une position de point mort d'une commande externe de boîte de vitesses d'un véhicule selon le préambule de la revendication 1.

L'invention a pour but de remédier aux inconvénients de l'art antérieur.

Dans ce but, la présente invention propose un dispositif de rappel vers une position de point mort d'une commande externe de boîte de vitesses d'un véhicule, comprenant :
- un premier moyen de rappel vers la position de point mort ;
- un élément de sélection apte à être mis en mouvement pour la sélection des rapports de démultiplication de la boîte dans un premier sens ou dans un deuxième sens de sélection opposé au premier ;
le premier moyen étant adapté pour exercer un premier effort de rappel sur l'élément de sélection ce premier effort s'opposant audit premier sens ;
ce dispositif étant remarquable en ce que :
- il comprend en outre un second moyen de rappel vers la position de point mort, adapté pour exercer un second effort de rappel sur l'élément de sélection, ce second effort s'opposant au deuxième sens ;
- le premier moyen n'exerçant pas d'effort de rappel s'opposant au deuxième sens ; et
- le second moyen n'exerçant pas d'effort de rappel s'opposant au premier sens.

Ainsi, les premier et second moyens de rappel agissent indépendamment l'un de l'autre, ce qui permet donc de compenser une dissymétrie d'effort de sélection de la boîte de vitesses.

Selon une caractéristique particulière, les premier et second moyens de rappel sont configurés de sorte que la valeur du second effort de rappel est différente de celle du premier effort.

Selon l'invention, le dispositif comprend en outre un support fixe et une première butée liée à l'élément de sélection, un seul des premier ou second moyen de rappel étant en appui simultané sur le support et sur la première butée lorsque le premier ou second effort est exercé.

Selon l'invention, le dispositif comprend en outre une seconde butée liée à l'élément de sélection et les premier et second moyens de rappel sont configurés pour être en appui de part et d'autre du support et de la seconde butée dans la position de point mort.

Selon une caractéristique particulière, les premier et deuxième moyens de rappel sont des ressorts de torsion comportant chacun une première branche et une seconde branche.

Selon une caractéristique particulière, le dispositif est configuré de sorte que :
- les premières branches des ressorts sont disposées de part et d'autre de la première butée ; et
- les deuxièmes branches des ressorts sont disposées de part et d'autre de la seconde butée et du support mentionné plus haut.

Selon une caractéristique particulière, l'élément de sélection est mobile en rotation autour d'un axe de rotation fixe.

Selon une caractéristique particulière, les premier et second moyens de rappel sont montés tournants autour de l'axe précité.

L'invention concerne également une commande externe de boîte de vitesses comprenant au moins un tel dispositif de rappel.

Enfin, l'invention porte aussi sur un véhicule automobile comprenant une telle commande externe.

L'invention sera mieux comprise et d'autres aspects et avantages apparaîtront plus clairement à la lecture de la description qui suit d'un mode particulier de réalisation, donné à titre d'exemple nullement limitatif et en référence aux dessins qui l'accompagnent, dans lesquels :
- la figure 1 est une vue en perspective d'un mode particulier de réalisation d'un dispositif de rappel d'une commande externe de boîte de vitesses conforme à l'invention ;
- la figure 2A est une vue de côté du dispositif de la figure 1, dans un état correspondant à la position de point mort de la commande de boîte de vitesses ;
- la figure 2B est une vue de côté du dispositif de la figure 1, dans un état correspondant à un premier sens de sélection de la commande de boîte de vitesses ; et
- la figure 2C est une vue de côté du dispositif de la figure 1, dans un état correspondant à un deuxième sens de sélection de la commande de boîte de vitesses.

Sur l'ensemble des figures, les mêmes repères sont utilisés pour désigner les mêmes pièces.

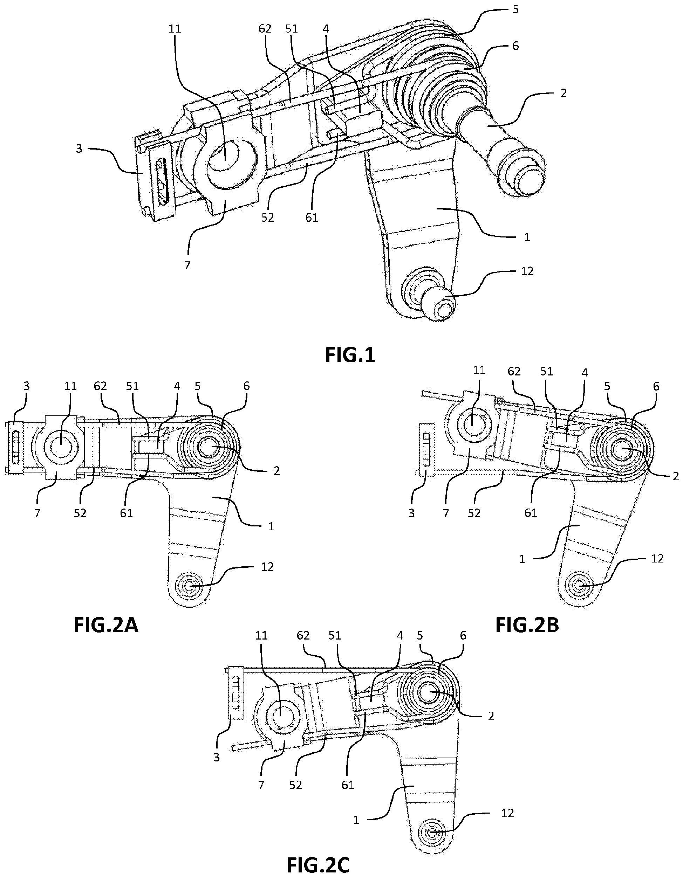

La figure 1 présente un dispositif de rappel selon l'invention d'une commande externe de boîte de vitesses comportant un élément 1 de sélection, un support 3, un premier ressort de torsion 5 et un second ressort de torsion 6.

L'élément de sélection 1 comprend une première butée 4 et une seconde butée 7 et est mobile en rotation autour d'un axe 2 de rotation. L'axe de rotation 2 est par rapport à la commande externe de boîte de vitesses.

La commande externe comprend généralement un boîtier ou carter (non représenté) dans lequel les différentes pièces la constituant sont montées. Par l'expression « fixe par rapport à la commande externe », on entend que chaque élément mentionné est fixe par rapport à ce boîtier.

L'élément 1 de sélection a une fonction de renvoi entre le mouvement d'un doigt de sélection lié au levier (non illustré) de la commande externe et un câble ou une tringle lié à la commande interne de la boîte de vitesses.

Le doigt de sélection est inséré dans un trou 11 de l'élément 1 de sélection et une extrémité du câble (ou de la tringle) est fixée sur un pion 12 de ce même élément 1.

Le support 3 est fixe par rapport la commande externe.

Dans le mode particulier de réalisation illustré sur les figures, le premier ressort 5 comporte une première branche 51 et une seconde branche 52. Le second ressort 6 comporte une première branche 61 et une seconde branche 62.

Chacun des premier et second ressorts 5 et 6 est monté mobile autour de l'axe de rotation 2 de l'élément 1 de sélection.

Les ressorts 5 et 6 sont montés de façon que :
- la première branche 51 du premier ressort 5 et la première branche 61 sont en appui de part et d'autre de la première butée 4 de l'élément 1 ; et
- la seconde branche 52 du premier ressort 5 et la seconde branche 62 du second ressort 6 sont disposés de part et d'autre de la seconde butée 7 de l'élément 1 et du support 3 fixe.

Ainsi, on peut noter que, puisque les butées 4 et 7 sont liées au même élément 1 de sélection, lorsque les branches d'un même ressort 5 ou 6 sont en appui simultané sur les deux butées 4 et 7, ce ressort n'exerce aucun effort de rappel sur l'élément 1.

La figure 2A présente le dispositif de rappel dans un état correspondant à une position de point mort de la commande externe.

Dans l'état correspondant à la position de point mort de la commande externe, les secondes branches 52 et 62 des ressorts 5 et 6 sont en appui de part et d'autre du support 3 et de la seconde butée 7 de l'élément 1 de sélection.

Ainsi, la seconde butée 7 se trouve maintenue entre les secondes branches 52 et 62 des ressorts 5 et 6. L'élément 1 de sélection se trouve alors dans une position d'équilibre.

La figure 2B présente le dispositif de rappel dans un état correspond à un premier sens de sélection de la commande externe.

Le premier sens de sélection correspond par exemple à la sélection des rapports de démultiplication de 5^{ème} et de 6^{ème} (ou de marche arrière) de la boîte de vitesses.

Le mouvement du levier dans le premier sens de sélection induit une rotation de l'élément 1 de sélection dans le sens horaire via le doigt de sélection qui est inséré dans le trou 11.

Pour le premier sens de sélection, la seconde branche 62 du second ressort 6 n'est plus en appui sur le support 3. Le second ressort 6 est alors en appui simultané sur les deux butées 4 et 7. Conformément à l'invention le second ressort 6 n'exerce donc pas d'effort de rappel sur l'élément 1 de sélection.

Pour le premier sens de sélection, seul le premier ressort 5 est en appui simultané sur la première butée 4 et sur le support 3 et exerce donc un effort de rappel de l'élément 1 vers la position de point mort s'opposant au premier ses de sélection.

En fonction des efforts dans la commande de la boîte de vitesses dans le premier sens de sélection, on peut donc ajuster l'effort de rappel exercé par le premier ressort 5, indépendamment de l'effort de rappel du second ressort 6.

La figure 2C présente le dispositif de rappel dans un état correspondant à un deuxième sens de sélection de la commande externe.

Le deuxième sens de sélection correspond par exemple à la sélection des rapports de démultiplication de 1^{ère} et de 2^{ème} de la boîte de vitesses.

Le mouvement du levier dans le deuxième sens de sélection induit une rotation de l'élément 1 de sélection dans le sens antihoraire.

Par analogie avec ce qui a été décrit à la figure 2B, pour le deuxième sens de sélection, la seconde branche 52 du premier ressort 5 n'est alors plus en appui sur le support 3. Le premier ressort 5 est donc en appui simultané sur les deux butées 4 et 7. Conformément à l'invention, le premier ressort 5 n'exerce alors pas d'effort de rappel sur l'élément 1 de sélection.

Pour le deuxième sens de sélection, seul le second ressort 6 est en appui simultané sur la première butée 4 et sur le support 3 et exerce donc un effort de rappel de l'élément 1 vers la position de point mort s'opposant au deuxième sens de sélection.

En fonction des efforts dans la commande de la boîte de vitesses dans le deuxième sens de sélection, on peut donc ajuster l'effort de rappel exercé par le second ressort 6.

Si les efforts dans la boîte de vitesses sont dissymétriques entre le premier et le deuxième sens de sélection, l'effort de rappel du premier ressort 5 peut donc être défini avec une valeur différente de celui du deuxième ressort 6.

Ainsi, chacun des ressorts de torsion agissant de manière indépendante, un tel dispositif de rappel permet de compenser une dissymétrie d'effort de sélection de la boîte de vitesses.

## Revendications

1. Dispositif de rappel vers une position de point mort d'une commande externe de boîte de vitesses d'un véhicule, comprenant :
- un premier moyen de rappel (5) vers ladite position de point mort ;
- un élément (1) de sélection apte à être mis en mouvement pour la sélection des rapports de démultiplication de ladite boîte dans un premier sens ou dans un deuxième sens de sélection opposé au premier ;
ledit premier moyen (5) étant adapté pour exercer un premier effort de rappel sur ledit élément (1), ledit premier effort s'opposant audit premier sens ;
- ledit dispositif de rappel comprenant un second moyen de rappel (6) vers ladite position de point mort, adapté pour exercer un second effort de rappel sur ledit élément (1), ledit second effort s'opposant audit deuxième sens ;
- ledit premier moyen (5) n'exerçant pas d'effort de rappel s'opposant audit deuxième sens ;
- ledit second moyen (6) n'exerçant pas d'effort de rappel s'opposant audit premier sens ;
- ledit dispositif de rappel comprenant en outre un support (3) fixe et une première butée (4) liée audit élément (1), un seul desdits premier ou second moyen de rappel (5, 6) étant en appui simultané sur ledit support (3) et sur ladite première butée (4) lorsque ledit premier ou second effort est exercé ; et
**caractérisé en ce qu'**il comprend en outre une seconde butée (7) liée audit élément (1) et **en ce que** lesdits premier et second moyens de rappel (5, 6) sont configurés pour être en appui de part et d'autre dudit support (3) et de ladite seconde butée (7) dans ladite position de point mort.

2. Dispositif selon la revendication 1, **caractérisé en ce que** lesdits premier et second moyens (5, 6) sont configurés de sorte que la valeur dudit second effort de rappel est différente de celle dudit premier effort.

3. Dispositif selon l'une quelconque des revendications précédentes, **caractérisé en ce que** les premier et deuxième moyens (5, 6) sont des ressorts de torsion comportant chacun une première branche (51, 61) et une seconde branche (52, 62).

4. Dispositif selon les revendications 2 et 3, **caractérisé en ce qu'**il est configuré de sorte que :
- lesdites premières branches (51, 61) sont disposées de part et d'autre de ladite première butée (4) ; et
- lesdites deuxièmes branches (52, 62) sont disposées de part et d'autre de ladite seconde butée (7) et dudit support (3).

5. Dispositif selon l'une quelconque des revendications précédentes, **caractérisé en ce que** ledit élément (1) est mobile en rotation autour d'un axe (2) de rotation fixe.

6. Dispositif selon la revendication 5, **caractérisé en ce que** les premier et second moyens (5, 6) sont montés tournants autour dudit axe (2).

7. Commande externe de boîte de vitesses comprenant au moins un dispositif de rappel selon l'une quelconque des revendications précédentes.

8. Véhicule automobile comprenant une commande externe selon la revendication 7.

## Patentansprüche

1. Vorrichtung zur Rückführung zu einer Leerlaufposition einer externen Steuerung einer Gangschaltung eines Fahrzeugs, die Folgendes umfasst:
- ein erstes Rückführungsmittel (5) zu der Leerlaufposition;
- ein Auswahlelement (1), das geeignet ist, für die Auswahl der Untersetzungsgänge der Gangschaltung in eine erste oder in eine zweite Auswahlrichtung, die der ersten entgegengesetzt ist, in Bewegung versetzt zu werden;
wobei das erste Mittel (5) angepasst ist, um eine erste Rückführungskraft auf das Element (1) auszuüben, wobei sich die erste Kraft der ersten Richtung entgegensetzt;
- wobei die Rückführungsvorrichtung ein zweites Rückführungsmittel (6) zu der Leerlaufposition umfasst, das angepasst ist, um eine zweite Rückführungskraft auf das Element (1) auszuüben, wobei sich die zweite Kraft der zweiten Richtung entgegensetzt;
- wobei das erste Mittel (5) keine Rückführungskraft, die sich der zweiten Richtung entgegengesetzt, ausübt;
- wobei das zweite Mittel (6) keine Rückführungskraft, die sich der ersten Richtung entgegensetzt, ausübt;
- wobei die Rückführungsvorrichtung außerdem einen stationären Träger (3) und einen ersten Anschlag (4), der mit dem Element (1) verbunden ist, umfasst, wobei eines des ersten oder zweiten Rückführungsmittels (5, 6) in gleichzeitiger Auflage auf dem Träger (3) und auf dem ersten Anschlag (4) ist, wenn die erste oder zweite Kraft ausgeübt wird; und
**dadurch gekennzeichnet, dass** sie außerdem einen zweiten Anschlag (7) umfasst, der mit dem Element (1) verbunden ist, und dass das erste und das zweite Rückführungsmittel (5, 6) ausgelegt sind, um in der Leerlaufposition auf jeder Seite des Trägers (3) und des zweiten Anschlags (7) in Auflage zu sein.

2. Vorrichtung nach Anspruch 1, **dadurch gekennzeichnet, dass** das erste und das zweite Mittel (5, 6) derart konfiguriert sind, dass der Wert der zweiten Rückführungskraft von dem der ersten Rückführungskraft unterschiedlich ist.

3. Vorrichtung nach einem der vorstehenden Ansprüche, **dadurch gekennzeichnet, dass** das erste und das zweite Mittel (5, 6) Torsionsfedern sind, die jeweils einen ersten Schenkel (51, 61) und einen zweiten Schenkel (52, 62) umfassen.

4. Vorrichtung nach den Ansprüchen 2 und 3, **dadurch gekennzeichnet, dass** sie derart ausgelegt ist, dass:
- die ersten Schenkel (51, 61) auf jeder Seite des ersten Anschlags (4) angeordnet sind; und
- der zweite Schenkel (52, 62) auf jeder Seite des zweiten Anschlags (7) und des Trägers (3) angeordnet sind.

5. Vorrichtung nach einem der vorstehenden Ansprüche, **dadurch gekennzeichnet, dass** das Element (1) in Drehung um eine stationäre Rotationsachse (2) beweglich ist.

6. Vorrichtung nach Anspruch 5, **dadurch gekennzeichnet, dass** das erste und das zweite Mittel (5, 6) um die Achse (2) drehend montiert sind.

7. Externe Steuerung einer Gangschaltung, die mindestens eine Rückführungsvorrichtung nach einem der vorstehenden Ansprüche umfasst.

8. Kraftfahrzeug, das eine externe Steuerung nach Anspruch 7 umfasst.

## Claims

1. A device for returning an external control of a vehicle gearbox to a neutral position, including:
- a first means (5) for returning to said neutral position;
- a selection element (1) able to be set in motion for the selection of the reduction ratios of said gearbox in a first selection direction or in a second selection direction opposed to the first;
said first means (5) being suitable for exerting a first return force on said element (1), said first force opposing said first direction;
- said returning device including a second means (6) for returning to said neutral position, suitable for exerting a second return force on said element (1), said second force opposing said second direction;
- said first means (5) not exerting a return force opposing said second direction;
- said second means (6) not exerting a return force opposing said first direction;
- said returning device further including a fixed support (3) and a first stop (4) linked to said element (1), only one of said first or second returning means (5, 6) resting simultaneously on said support (3) and on said first stop (4) when said first or second force is exerted; and
**characterized in that** it further includes a second stop (7) linked to said element (1) and **in that** said first and second returning means (5, 6) are configured so as to be resting on either side of said support (3) and of said second stop (7) in said neutral position.

2. The device according to claim 1, **characterized in that** said first and second means (5, 6) are configured such that the value of said second return force is different from that of said first force.

3. The device according to any one of the preceding claims, **characterized in that** the first and second means (5, 6) are torsion springs each comprising a first branch (51, 61) and a second branch (52, 62).

4. The device according to claims 2 and 3, **characterized in that** it is configured such that:
- said first branches (51, 61) are arranged on either side of said first stop (4); and
- said second branches (52, 62) are arranged on either side of said second stop (7) and of said support (3).

5. The device according to any one of the preceding claims, **characterized in that** said element (1) is movable in rotation about a fixed rotation axis (2).

6. The device according to claim 5, **characterized in that** the first and second means (5, 6) are mounted rotatably about said axis (2).

7. An external control of a gearbox including at least one device for returning according to any one of the preceding claims.

8. A motor vehicle including an external control according to claim 7.
